# EUROPEAN PATENT APPLICATION

(11) **EP 1 837 789 A2**
(43) Date of publication of application: **26.09.2007**
(21) Application number: 07104034.9
(22) Date of filing: 13.03.2007
(51) Int. Cl.: G06F 21/00

(54) **Method and apparatus for temporarily accessing content using temporary license**

(30) Priority: 22.03.2006 KR 20060026176
(71) Applicant: SAMSUNG ELECTRONICS CO., LTD., Suwon-si, Gyeonggi-do 442-742 (KR)
(72) Inventor: Kim, Hyoung-shick, Seoul (KR)
(74) Representative: Perkins, Dawn Elizabeth

(57) **Abstract**

A method and apparatus are provided for temporarily accessing content using a temporary license. The method includes creating an authenticated license that enables a use of the content, creating a temporary license that enables a use of part of the content, and transmitting the authenticated license and the temporary license to a device.

## Description

Methods and apparatuses consistent with the present invention relates to a digital rights management (DRM) system, and more particularly, to temporarily accessing content using a temporary license.

Developments in Internet technology and multimedia technology have facilitated the distribution and access of digital content. If no methods of the protection of the copyrights of items of digital content are available, Internet and multimedia-related technologies are highly likely to be misused for unauthorized copying, tampering, and distribution of digital content. Accordingly, various digital content protection methods for protecting digital content copyrights and controlling unauthorized distribution of the digital content have been developed.

DRM is a technology that aims at protecting digital content copyrights and preventing digital content from being accessed and used by unauthorized users, and involves a safe distribution and control of the digital content according to predetermined policies to protect the content copyrights and prevent the content from being accessed and used by unauthorized users.

Superdistribution is a method in which content is shared between users, instead of being distributed from content providers to users. Superdistribution allows a faster distribution of content than traditional content distribution methods, keeps content distribution and advertisement costs down for the content providers, and facilitates the accessibility of content by users.

Related art superdistribution methods involve the use of a source system A that transmits content and a sink system B that receives content and uses the content. The related art superdistribution methods may adopt different content distribution schemes according to whether the source system A and the sink system B belong to the same domain or not.

Most related art superdistribution methods are based on the assumption that the sink system must be online in order to acquire a license for encrypted content in real time.

Accordingly, when the sink system B issues a request for the transmission of content of interest to the source system A, the source system A determines through an authentication process whether the sink system B is a device that is authorized to access the content of interest. If the sink system B is determined through the authentication process to be an authorized device, the source system A transmits the content of interest, but not a license for the content, to the sink system B.

Then, the sink system B receives the content of interest, which is encrypted, and acquires an address from which the license for the content can be purchased from information included in the content, and purchases the license for the content from the acquired address. Thereafter, the sink system B grants a right to access the content of interest by using the purchased license.

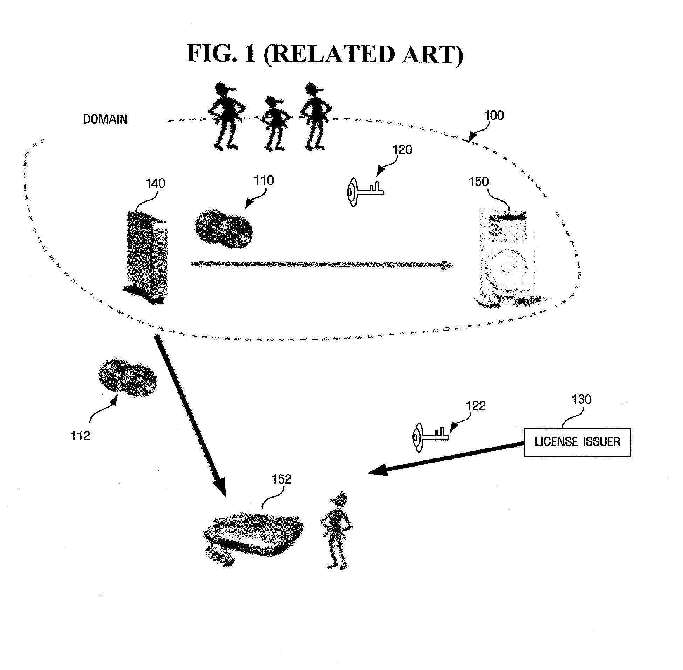

Figure 1 is a diagram for explaining a related art superdistribution method. Referring to Figure 1, two devices 140 and 150 are in a domain 100, and thus share a domain key of the domain 100. Since a content encryption key 120 is encrypted with the domain key of the domain 100, the devices 140 and 150 can share content, which is encrypted with the content encryption key 120. However, an external device 152, which is located outside the domain 100, cannot use the content encryption key 120, since the external device 152 does not have the domain key of the domain 100. Thus, the external device 152 can only receive content 112. In order to access the content 112, the external device 152 must purchase a content encryption key 122 that is needed to access the content 112 from a license issuer 130.

However, the related art superdistribution method illustrated in Figure 1 is only suitable if the external device 152 is a device such as a mobile phone or a personal computer (PC) that can be online at any time.

Further, related art superdistribution methods have the following disadvantages.

First, a sink system must be online in order to acquire a license through purchase. Second, the sink system cannot use encrypted content until a license for the encrypted content has been acquired. Third, the sink system must purchase a license for content, whenever necessary, regardless of whether the sink system and a source system are both included in the same user device or in the same domain device.

Thus, the related art superdistribution methods are based on the assumption that the source system and the sink system are online all the time and require repurchases of licenses for content.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method and apparatus for providing a temporary license which can allow a temporary access of digital content by an external device even when the external device is not online.

The present invention also provides a method and apparatus for charging the access of digital content using a temporary license.

According to an aspect of the present invention, there is provided a method of temporarily accessing content using a temporary license, the method including creating an authenticated license that enables a use of the content, creating a temporary license that enables a use of part of the content, and transmitting the authenticated license and the temporary license to a device.

According to another aspect of the present invention, there is provided a method of temporarily accessing content using a temporary license, the method including receiving a temporary license and temporary content, generating a temporary key based on information included in the temporary license, and decrypting the temporary content with the temporary key.

According to another aspect of the present invention, there is provided an apparatus for temporarily accessing content using a temporary license, the apparatus including an authenticated license creation module which creates an authenticated license that is needed to access the content, a temporary license creation module which creates a temporary license that is needed to access part of the content, and a transmission module which transmits the authenticated license and the temporary license to a device.

According to another aspect of the present invention, there is provided an apparatus for temporarily accessing content using a temporary license, the apparatus including a reception module which receives a temporary license and temporary content, a key generation module which generates a temporary key based on information included in the temporary license, and a decryption module which decrypts the temporary content with the temporary key.

The above and other aspects of the present invention will become more apparent by describing in detail exemplary embodiments thereof with reference to the attached drawings, in which:
Figure 1 is a diagram for explaining a related art superdistribution method;
Figure 2 is a diagram for explaining the issuance of a temporary license to a sink system by a source system and the use of the temporary license by the sink system, according to an exemplary embodiment of the present invention;
Figure 3 is a scenario diagram for explaining the use of a temporary license according to an exemplary embodiment of the present invention;
Figure 4 is a block diagram for comparing a temporary license and an authenticated license according to an exemplary embodiment of the present invention;
Figure 5 is a block diagram of an apparatus for generating a temporary license according to an exemplary embodiment of the present invention, and explains interactions among a plurality of elements of the apparatus for the generation of a temporary license and content that is protected using the temporary license;
Figure 6 is a block diagram of a sink system according to an exemplary embodiment of the present invention, and explains interactions among a plurality of elements of the sink system for the generation of a temporary key;
Figure 7 is a block diagram of a use tracking and reporting module illustrated in Figure 6; and
Figure 8 is a flowchart illustrating the decryption of temporary content using a temporary license by an external device and the use of the decrypted temporary content by the external device, according to an exemplary embodiment of the present invention.

The present invention will now be described more fully with reference to the accompanying drawings, in which exemplary embodiments of the invention are shown. The invention may, however, be embodied in many different forms and should not be construed as being limited to the exemplary embodiments set forth herein, rather, these exemplary embodiments are provided so that this disclosure will be thorough and complete, and will fully convey the concept of the invention to those skilled in the art. Like reference numerals in the drawings denote like elements, and thus their description will be omitted.

The present invention is described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, a special purpose computer, or other programmable data processing apparatus to produce a machine, such that the instructions, which are executed via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

A license is needed to access content, and includes information that is needed to decrypt encrypted content, and a rights object which prescribes restrictions imposed on the use of content. In this disclosure, all objects including information that is needed for a DRM system to access content will hereinafter be collectively referred to as licenses, even though they are not specifically named licenses or rights objects. A license is classified into a temporary license or an authenticated license. The temporary license is a license to temporarily use content, and the authenticated license is a license legitimately acquired through purchase. The authenticated license is a typical license widely used in the field to which the present invention pertains. In this disclosure, the authenticated license is named as it is in order to be differentiated from the temporary license.

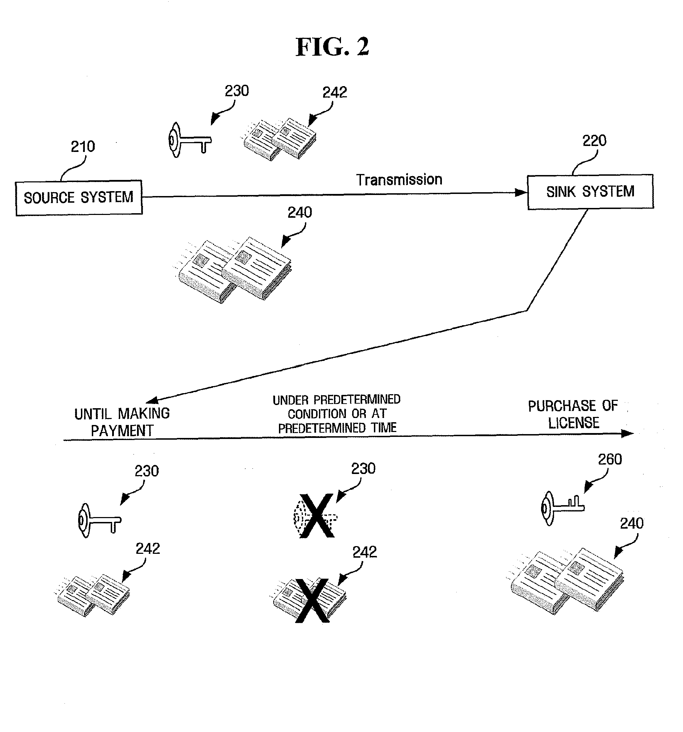

Figure 2 is a diagram for explaining the issuance of a temporary license to a sink system by a source system and the use of the temporary license by the sink system, according to an exemplary embodiment of the present invention. Referring to Figure 2, the source system 210 transmits encrypted source content 240, the temporary license 230, and temporary content 242 to the sink system 220. The temporary content 242 can be decrypted using the temporary license 230. The temporary content 242, unlike the encrypted source content 240, is content with restrictions on its use, and can thus be used only for a predetermined amount of time or only a limited number of times. The restrictions on the use of the temporary content 242 include event-driven restrictions and time-driven restrictions. For example, if the encrypted source content 240 is music content, then the restrictions are imposed on the use of the temporary content 242 such that only a one-minute-long beginning portion of the temporary content 242 can only be reproduced or that the entire temporary content 242 can be reproduced, but only three times or for three hours. The temporary content 242 is encrypted, and can be decrypted using the temporary license 230. The sink system 220 cannot readily use the encrypted source content 240 transmitted by the source system 210 because the source system 210 has not transmitted authenticated licenses 120 and 122 illustrated in Figure 1, that are needed to use the encrypted source content 240, to the sink system 220.

The sink system 220 accesses the temporary content 242 using the temporary license 230 until purchasing a predetermined authenticated license. The sink system 220 cannot access the encrypted source content 240 using the temporary license 230.

The temporary license 230 expires under a predetermined condition or at a predetermined moment of time. In other words, the temporary license 230 expires when the predetermined condition regarding the duration of use of the temporary content 242, the number of times of use of the temporary content 242, or the service life of the temporary content 242 is met. Once the temporary license 230 expires, the sink system 220 cannot use the temporary content 242 any longer. A user performs authentication regarding the sink system 220 by making the sink system 220 go online and participate in a domain, and purchases an authenticated license 260. Then, the user can access the encrypted source content 240 using the authenticated license 260.

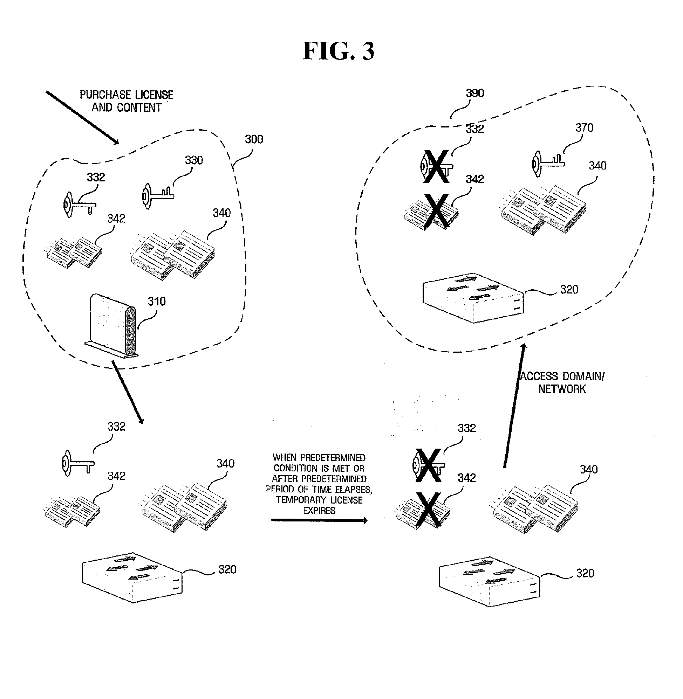

Figure 3 is a scenario diagram for explaining the use of a temporary license by an external device according to an exemplary embodiment of the present invention. Referring to Figure 3, examples of the external device 320 include a portable multimedia player (PMP) and an Moving Picture Experts Group audio layer 3 (MP3) player. The external device receives content from a host device such as a PC. In general, the external device generally does not have a permanent online connection, and thus cannot readily purchase a license. The external device can go online. A scenario illustrated in Figure 3 can be applied to the use of trial content. For example, the scenario which involves the issuance of a temporary license and the use of the temporary license can be used to enable the temporary use of content, particularly, a trial version of content.

Referring to Figure 3, reference numerals 300 and 390 respectively indicate a first domain and a second domain. A user of the first domain 300 purchases a license and content from a license issuer and a content issuer, respectively, using a domain management device 310 that manages the domain 300, for example, a server or a computer. In detail, the user of the first domain 300 purchases a temporary license 332 and temporary content 342 as well as an authenticated license 330 and encrypted source content 340.

A source system such as the domain management device 310 legitimately charges for a license package and encrypted content according to a payment protocol that is prescribed in a content purchase service, and then downloads the license package and the encrypted content. The license package comprises a typical license and a temporary license for superdistribution. The license package may include a typical license only. In this case, assume that a source system can create a temporary license using the typical license included in the license package. The license package is encrypted with predetermined information such as an identifier of a predetermined source system and thus can only be accessed by the predetermined source system. Then, the license package is stored in a secure area.

The domain management device 310 transmits the temporary license 332, the temporary content 342, and the encrypted source content 340 to the external device 320, which is a sink system that does not belong to any domain. Before the transmission of the temporary license 332, the temporary content 342, and the encrypted source content 340, the domain management device 310 determines through authentication whether the external device 320 is eligible for the temporary license 332 and the temporary content 342 in order to provide the temporary license 332 to a device that provides a security function and thus to prevent the temporary license 332 from being attacked or changed.

The external device 320 receives the temporary license 332, the temporary content 342, and the encrypted source content 340 transmitted by the domain management device 310, decrypts the temporary content 342 using the temporary license 332, and renders the decrypted temporary content. The external device 320 may decrypt the temporary content 342 with a temporary key included in the temporary license 332. However, the use of the temporary content 342 is restricted because of a predetermined expiration condition regarding the expiration of the temporary license 332, for example, the expiration date of the temporary license 332 and the maximum number of times of use of the temporary license 332. Once the expiration condition is met, the external device 320 cannot use the temporary content 342 any longer. Since the external device 320 does not possess the authenticated license 330, the external device 320 cannot use the encrypted source content 340 either.

However, if the external device 320 goes online by being connected to the second domain 390, a network device or a network, then the external device 320 can purchase an authenticated license 370, and use the encrypted source content 340 using the authenticated license 370. The external device 320 may purchase the authenticated license 370 before the expiration of the temporary license 332.

Referring to the scenario illustrated in Figure 3, the expiration condition must be clearly stated in order to prevent the user of the domain 300 from continuously using the temporary license 332. For this, when a sink system such as the external device 320 is connected to a host system via a universal serial bus (USB), a domain manager of the host system or a module that performs similar functions to those of the domain manager may determine whether the sink system has ever used the temporary license 332. If it is determined that the sink system has ever used the temporary license 332, the domain manager or the module may revoke the temporary license 332.

Also, the sink system may report charges for the use of content to a seller of the content via a secure log inside the sink system, and then additionally pay the charges for the use of the content. For this reason, there is the need to safely realize the secure log.

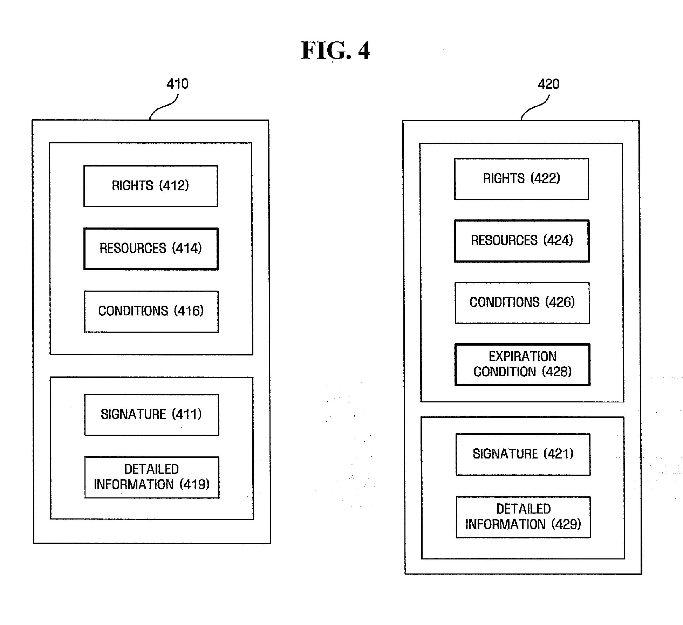

Figure 4 is a diagram for comparing an authenticated license 410 and a temporary license 420 according to an exemplary embodiment of the present invention. Referring to Figure 4, the authenticated license 410 includes information that is needed to use predetermined content, i.e., rights 412, resources 414 and conditions 416, and information that is needed to examine the security of the authenticated license 410 and authenticate the authenticated license 410, i.e., a signature 411 and detailed information 419.

The rights 412 specify rights to the predetermined content. The resources 414 include a content encryption key that is needed to decrypt the predetermined content. The conditions 416 specify restrictions that are imposed on the use of the predetermined content. Examples of the restrictions include the maximum number of times of use of the predetermined content and the maximum duration of use of the predetermined content.

The signature 411 provides information that is needed to determine whether the authenticated license 410 has ever been modified by any illegitimate access thereto. The detailed information 419 includes information regarding the predetermined content and information regarding an issuer of the authenticated license 410.

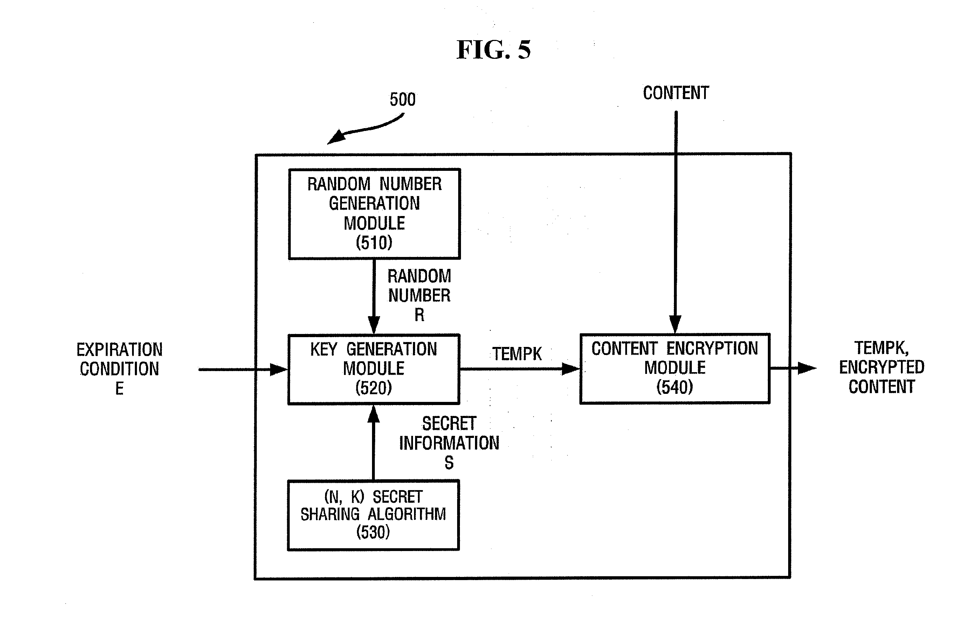

The temporary license 420, like the authenticated license 410, includes rights 422, conditions 426, a signature 421, and detailed information 429. The resources 424 include information that is needed to generate a temporary key, wherein the temporary key is needed to decrypt the predetermined content. The information included in the resources 424 will be described later in further detail with reference to Figure 5. The temporary license 420 also includes an expiration condition 428 regarding the expiration of the temporary license 420. The expiration condition 428 may be separate from the conditions 426 or may be included in the conditions 426.

The term "module," as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

Figure 5 is a block diagram of an apparatus for issuing a temporary license according to an exemplary embodiment of the present invention, and explains interactions among a plurality of elements of the apparatus for the creation of the temporary license. Referring to Figure 5, the temporary license may be created using a different method from a method of creating an authenticated license using an identifier of an external device that is generated during the authentication of the external device. Since the temporary license is transmitted from a source system to an arbitrary sink system, the temporary license can be issued to any sink system that satisfies a predetermined condition. In this regard, the temporary license can be generated using a different method from a method of creating an authenticated license.

The apparatus 500 receives an expiration condition E and content. The expiration condition E is input to a key generation module 520 of the apparatus 500. A random number generation module 510 generates a random number R. A secret sharing algorithm 530 generates secret information S. The secret sharing algorithm 530 divides the secret information S into N pieces of information. If K pieces of information among the N pieces of information are known, then the secret information S can be restored. For example, when N=10 and K=7, the secret information S cannot be restored using six pieces of information but can be restored using seven pieces of information. The key generation module 520 generates a temporary key TEMPK based on the secret information S, the random number R, and the expiration condition E.

The apparatus 500 may be a server. The apparatus 500 may also include an authenticated license module (not shown) which creates an authenticated license, and a transmission module (not shown) which transmits a license created by the apparatus 500 to an external device. The apparatus 500 may transmit temporary content, and encrypted source content that can only be used with an authenticated license.

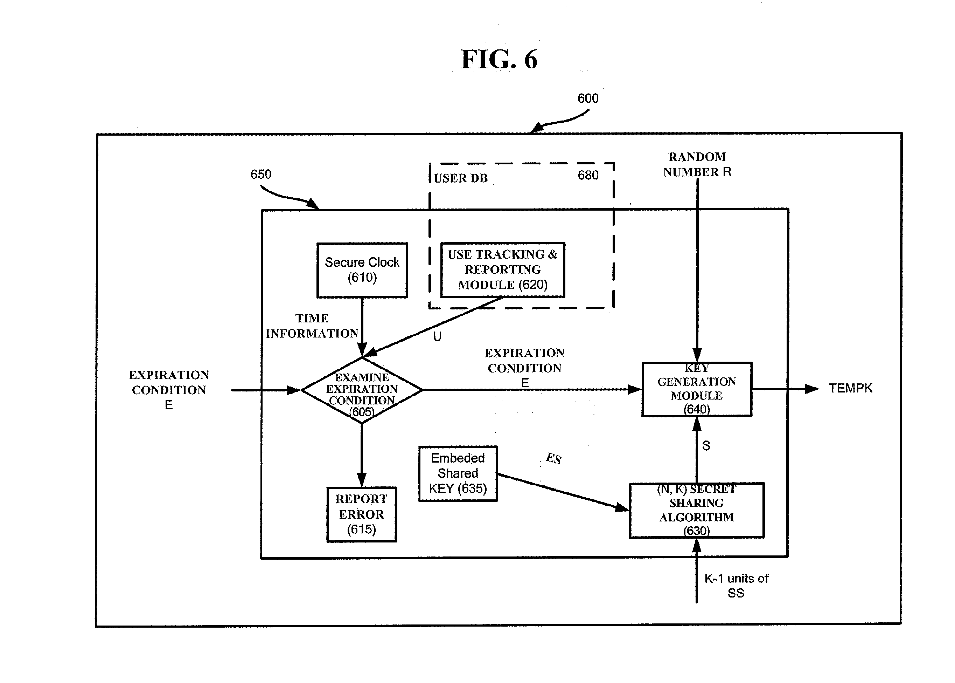

Figure 6 is a block diagram of a sink system according to an exemplary embodiment of the present invention, and explains interactions among a plurality of elements of the sink system for the generation of a temporary key TEMPK in the sink system. Referring to Figure 6, the temporary key TEMPK is a key used to decrypt encrypted temporary content. If the temporary key TEMPK is indiscriminately transmitted to any sink system, then the encrypted temporary content may be indiscriminately exploited. Therefore, it is more efficient from the aspect of security to transmit resources used to generate the temporary key TEMPK than to transmit the temporary key TEMPK.

Referring to Figure 6, the sink system 600 receives an expiration condition E and a random number R that are needed to generate the temporary key TEMPK, and a plurality of server shared keys SS that are needed to generate secret information S. The expiration condition E, the random number R, and the server shared keys SS are all stored in a temporary license. A portion 650 of the sink system 600 generates the temporary key TEMPK. The portion 650 may be a tamper resistant module (TRM) which provides security and is thus never changed or tampered by an external device.

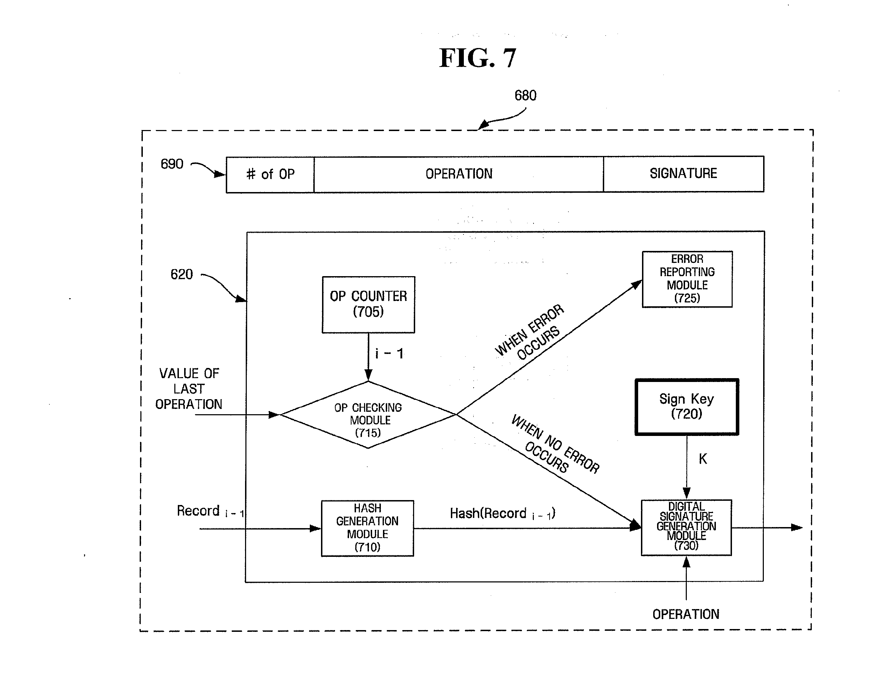

In operation 605, the expiration condition E is examined. Also, in operation 605, time information is received from a secure clock 610, which is included in the portion 650, and use information U regarding the use of content, including log information regarding the previous use of the content, is received from a use tracking and reporting module 620. The use information U is generated by the use tracking and reporting module 620. The use tracking & reporting module 620 analyzes or outputs data stored in a user database 680. The user database 680 may be installed in a predetermined area in the sink system 600. This will be described later in further detail with reference to Figure 7.

In operation 605, it is determined whether the expiration condition E has been met based on the time information and the use information U. In operation 615, if the use information U has been tampered, an error is reported. If the expiration condition E does not have any defect or problem, the expiration condition E may be input to a key generation module 640 as an input value that is needed to generate the temporary key TEMPK.

As described above with reference to Figure 5, the random number R, the secret information S, and the expiration condition E are needed to generate the temporary key TEMPK. A random number that is stored in a resource area of the temporary license can be used as the random number R.

The secret information S is not a given value but is a value obtained through calculation. In order to calculate the secret information S, both the server shared keys SS, which are stored in the resource area of the temporary license, and an embedded shared key ES (635), which is a shared key that is embedded in the sink system 600, are needed. The embedded shared key ES is stored in such an area of the sink system 600 that the embedded shared key ES cannot be read or modified by an external device.

The server shared keys SS comprise (K-1) keys that are needed to generate the secret information S, which is stored in a server. As described above with reference to Figure 5, the secret information S may be generated using N keys, and may be restored through estimation using K keys of the N keys. Accordingly, the secret information S cannot be generated using the server shared keys SS because the server shared keys SS only comprise (K-1) keys. However, according to the present exemplary embodiment, there is another key stored in the sink system 600 as the embedded shared key ES. Therefore, a total of K keys, including the embedded shared key ES and the (K-1) keys of the server share SS, are provided to the sink system 600. Thus, it is possible to calculate the secret information S.

In other words, assuming that first through N-th keys SKey₁, SKey₂, ..., and SKey_{N} are needed to generate the secret information S, that only the first through (K-1)-th keys SKey₁, SKey₂, ..., SKey_{K-1} are stored in the resource area of the temporary license, and that the K-th key SKey_{K} is embedded in the sink system 600, the secret information S can be calculated using a secret sharing algorithm.

Alternatively, two keys may be embedded in the sink system 600, and the server shared keys SS may comprise (K-2) keys. A device with no key embedded therein cannot use the temporary license. Accordingly, only authenticated devices can use the temporary license, and content can be protected.

Referring to Figure 6, a key generation module 640 generates the temporary key TEMPK based on the secret information S, the expiration condition E, and the random number R. Then, the temporary content can be decrypted using the temporary key TEMPK. However, if any one of the secret information S, the expiration condition E, and the random number R is not provided, the key generation module 640 cannot generate the temporary key TEMPK. In this case, the sink system 600 cannot use the temporary content.

The sink system 600 may also include a reception module (not shown) which receives the temporary license and the temporary content. The sink system 600 may also include a transmission module (not shown) which transmits results of an operation performed on the temporary content and enables charging for the use of the temporary content.

Figure 7 is a block diagram of a use tracking and reporting module 620 illustrated in Figure 6. Referring to Figure 7, if a user database 680 which stores all records regarding the use of temporary content by a user is installed in a TRM and thus can be prevented from being tampered or changed, then the manufacturing costs of the user database 680 will increase. According to the present exemplary embodiment, the user database 680 is placed in a typical storage space, and only a portion of the user database 680 that analyzes whether information stored in the user database 680 has ever been tampered is placed in a TRM, thereby proving security.

An example of the use tracking and reporting module 620 illustrated in Figure 6 will hereinafter be described in detail with reference to Figure 7. Referring to Figure 7, reference numeral 690 indicates a record of the user database 680. The record 690 includes an operation identifier (# of OP), operation type information, and a signature. The operation identifier may have an initial value of 1 and gradually increase from the initial value of 1. If a plurality of pieces of operation information are sequentially stored in the user database 680, then it is possible to determine later whether temporary content has been used.

However, there is always a probability of operation information being tampered. Thus, according to the present exemplary embodiment, operation information is inspected, as indicated by reference numeral 620, thereby generating a signature. Then, the signature may be stored in the user database 680.

Whenever temporary content is used, an operation checking module 715 searches for an identifier of a previous operation, and determines whether the identified operation identifier is that of a last operation. For example, if the identified operation identifier is i-1 and is stored as the identifier of the last operation, then an operation counter 705 may determine whether the identified operation identifier has been changed. Since the operation counter 705 is part of a TRM, the operation counter 705 is never tampered by an external attack. If it is determined that operation information has been modified, then an error reporting module 725 announces that an error has occurred. A hash generation module 710 generates a hash value by hashing an (i-1)-th record using a hash function in order to store information regarding a current operation together with signature information. If the previous operation does not exist, the hash function may be executed using information other than operation information as an input value, e.g., using the random number R as an input value. A digital signature generation module 730 generates a signature using a sign key 720, the hashed (i-1)-th record, and an operation to be performed. The signature generated by the digital signature generation module 730 is stored in the user database 680 together with the operation to be performed.

As a result of the aforementioned process, operation information regarding operations that have ever been performed on the temporary content is stored in the user database 680 as usual. However, since the portion that determines whether the operation information has been tampered is placed in a TRM, the reliability of records regarding the use of temporary content by a user can be improved, i.e., a secure log can be created.

It is possible to effectively prevent attempts to illegitimately access or tamper temporary content by creating a secure log. Also, it is possible to charge for the use of temporary content by storing records regarding the use of the temporary content. Accordingly, it is possible to enhance the efficiency of the use of temporary content while protecting the copyright of the temporary content.

Accordingly, in a case where a secure log is created, a sink system, e.g., the external device 320 illustrated in Figure 3, may be charged for the use of temporary content as well as the issuance of an authenticated license when the external device 320 accesses the domain 300 (or a network) and makes payment for the authenticated license.

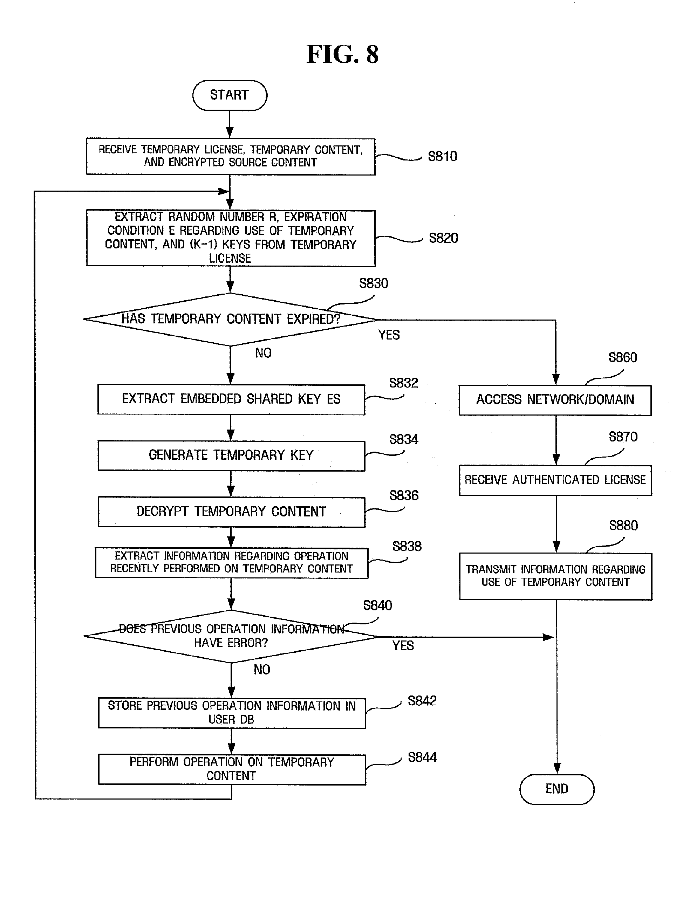

Figure 8 is a flowchart illustrating the decryption of temporary content using a temporary license by an external device and the use of the decrypted temporary content by the external device, according to an exemplary embodiment of the present invention. Referring to Figure 8, in operation S810, a temporary license, temporary content, and encrypted source content are received. In operation S820, a random number R, an expiration condition E regarding the use of the temporary content, and K-1 server shared keys that are needed to generate secret information are extracted from the temporary license. In operation S830, it is determined whether the temporary content has expired by determining whether the expiration condition E is met. If it is determined, in operation S830, that the temporary content has expired, then the method proceeds to operation S860.

If it is determined, in operation 830, that the temporary content has not yet expired, then, in operation S832, an embedded shared key ES, which is a shared key embedded in the external device, is extracted. In operation S834, a temporary key is generated using the random number R, the (K-1) server shared keys, and the embedded shared key ES. The generation of secret information using the (K-1) server shared keys and the embedded shared key ES has already been described above with reference to Figure 6, and thus a detailed description thereof will be omitted.

In operation S836, the temporary content is decrypted using the temporary key. Then, the external device can use the decrypted temporary content. When using the decrypted temporary content, the external device does not need to store information regarding each operation. Accordingly, in operation S838, information regarding an operation recently performed on the temporary content is extracted, as described above with reference to Figure 7. In operation S840, it is determined whether information regarding a previous operation information has an error. If it is determined, in operation S840, that the previous operation information does not have any error, in operation S842, the previous operation information is stored in a user database. However, if it is determined, in operation S840, that the previous operation information has an error, the method is terminated. In operation S844, an operation is performed on the temporary content.

Once the temporary content has expired, an authenticated license must be acquired to use the encrypted source content. The acquirement of the authenticated license may be performed even before the expiration of the temporary content. In operation S860, the external device accesses a network or a domain via a device in order to acquire the authenticated license. In this case, the external device can access the network or the domain by being connected to the device (e.g., a computer) that is connected to the network or the domain. In operation S870, the external device receives the authenticated license through authentication and purchase. In operation S880, the external device transmits information regarding the use of the temporary content and makes payment for the use of the temporary content.

According to the exemplary embodiments of the present invention, it is possible to overcome the limitation of related art DRM superdistribution in that devices must be online to temporarily use content. Thus, even systems that are not online can temporarily use content.

In addition, according to the exemplary embodiments of the present invention, it is possible to charge for the use of temporary content and thus effectively protect the copyright of the temporary content.

Moreover, according to the exemplary embodiments of the present invention, it is possible to expand the scope of use of temporary content and thus effectively protect DRM systems and content. Also, the present invention can be applied to business models that involve deferred payment services.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of providing access to digital content by an external device, the method comprising:
creating an authenticated licence which enables access to a source content;
creating a temporary licence which enables access to a temporary content;
transmitting the source content, the temporary content and the temporary licence to the external device.

2. The method according to claim 1, wherein the temporary license allows restricted access and/or use of the temporary content.

3. The method according to claim 1 or 2, comprising encrypting the temporary content prior to transmitting with a temporary key, and including information required to decrypt the temporary content in the temporary licence.

4. The method according to claim 3, wherein the information required to decrypt the temporary content comprises the temporary key.

5. The method according to claim 3, wherein the information required to decrypt the temporary content comprises information required to generate the temporary key.

6. The method according to claim 3, 4 or 5, wherein the temporary licence includes a rights object which prescribes restrictions imposed on the use of the temporary content.

7. The method according to any one of claims 3 to 6, wherein the temporary key is generated by selectively combining a random number and an expiration condition relating to the use of the temporary information.

8. The method according to any one of claims 3 to 7, wherein the temporary key is generated using secret information which is divided into N pieces of information, wherein if K pieces of information are known, all of the information can be restored.

9. The method according to claim 8, wherein each piece of information is encoded with a different key of N keys, and the temporary licence includes a number of the keys, the number being less than K.

10. The method according to any one of the preceding claims, further comprising transmitting the authenticated licence to the external device.

11. A method of temporarily accessing digital content using a temporary license, the method comprising:
receiving a temporary license and temporary content; generating a temporary key based on information included in the temporary license; and
decrypting the temporary content with the temporary key.

12. The method of claim 11, further comprising receiving encrypted source content corresponding to the temporary content.

13. The method of claim 11 or 12, wherein the generating the temporary key comprises generating the temporary key by selectively combining a random number and an expiration condition regarding a use of part of the content.

14. The method of any one of claims 11 to 13, wherein the generating the temporary key comprises generating the temporary key based on secret information.

15. The method of claim 14, wherein the secret information is generated using a number of keys included in the temporary license and a number of embedded keys, the number of keys included in the temporary license being less than K and the number of embedded keys being less than the number of keys included in the temporary license, and the secret information being calculated using a total of K keys.

16. The method of claim 14, wherein the secret information is generated using a total of N keys and can be calculated if at least K keys of the N keys are known, and the temporary license comprises a number of keys, the number of keys included in the temporary license being less than K.

17. The method of any one of claims 11 to 16, further comprising:
performing an operation on the temporary content using the temporary license; and
storing information regarding the operation.

18. The method of claim 17, further comprising examining previously stored information regarding a previous operation, before the performing the operation.

19. The method of any one of claims 11 to 18, further comprising:
accessing a network or a domain; and
receiving an authenticated license that is needed to access source content corresponding to the temporary content.

20. The method of claim 19, further comprising transmitting information regarding an operation performed on the temporary content to a device that constitutes the network or the domain, after the accessing the network or the domain.

21. A method of temporarily accessing content using a temporary license, the method comprising:
creating an authenticated license that enables a use of the content;
creating a temporary license that enables a use of part of the content; and
transmitting the authenticated license and the temporary license to a device.

22. An apparatus for temporarily accessing content using a temporary license, the apparatus comprising:
an authenticated license creation module which creates an authenticated license that is needed to access the content;
a temporary license creation module which creates a temporary license that is needed to access part of the content; and
a transmission module which transmits the authenticated license and the temporary license to a device.

23. The apparatus of claim 22, further comprising an encryption module which encrypts the content with a temporary key included in the temporary license.

24. The apparatus of claim 23, further comprising a key generation module which generates the temporary key by selectively combining a random number and an expiration condition regarding a use of the part of the content.

25. The apparatus of claim 23 or 24, further comprising a key generation module which generates the temporary key based on secret information.

26. The apparatus of claim 25, wherein the secret information is generated using a total of N keys and is calculated if at least K keys of the N keys are known, and the temporary license comprises a number of keys, the number of keys included in the temporary license being less than K.

27. The apparatus of any one of claims 22 to 26, wherein the transmission module transmits encrypted source content that can be accessed using the authenticated license to the device.

28. An apparatus for temporarily accessing content using a temporary license, the apparatus comprising:
a reception module which receives a temporary license and temporary content;
a key generation module which generates a temporary key based on information included in the temporary license; and
a decryption module which decrypts the temporary content with the temporary key.

29. The apparatus of claim 28, wherein the reception module receives encrypted source content corresponding to the temporary content.

30. The apparatus of claim 28 or 29, wherein the key generation module generates the temporary key by selectively combining a random number and an expiration condition regarding a use of part of the content.

31. The apparatus of any one of claims 28 to 30, wherein the key generation module generates the temporary key based on secret information.

32. The apparatus of claim 31, wherein the secret information is generated using a number of keys included in the temporary license and a number of embedded keys, the number of keys included in the temporary license being less than K and the number of embedded keys being less than the number of keys included in the temporary license, and the secret information being calculated using a total of K keys

33. The apparatus of claim 31 or 32, wherein the secret information is generated using a total of N keys and can be calculated if at least K keys of the N keys are known, and the temporary license comprises a number of keys, the number of keys included in the temporary license being less than K.

34. The apparatus of any one of claims 28 to 33, further comprising a reporting module which performs an operation on the temporary content using the temporary license, and stores information regarding the operation.

35. The apparatus of claim 34, wherein the reporting module analyzes previously stored information regarding a previous operation before performing the operation on the temporary content.

36. The apparatus of any one of claims 28 to 35, wherein the reception module accesses a network or a domain, and receives an authenticated license that is needed to access source content corresponding to the temporary content.

37. The apparatus of claim 36, further comprising a transmission module which transmits information regarding an operation performed on the temporary content to a device that constitutes the network or the domain.

38. A computer readable recording medium storing a computer program for performing a method in accordance with any one of claims 1 to 21
